# EUROPEAN PATENT APPLICATION

(11) **EP 0 576 715 A1**
(43) Date of publication of application: **05.01.1994**
(21) Application number: 92111333.8
(22) Date of filing: 03.07.1992
(51) Int. Cl.: G21F 9/02, B01D 59/26, B01D 53/04, C01B 3/50

(54) **A method for purifying a stream of hydrogen isotopes from impurities**

(71) Applicant: EUROPEAN ATOMIC ENERGY COMMUNITY (EURATOM), L-2920 Luxembourg (LU)
(72) Inventor: Pierini, Giancarlo, Varese (IT); Vansant, Etienne, B-2980 Zoersel (BE); Malara, Carlo, I-22100 Como (IT); Ricapito, Italo, Clusone-BG (IT); Spelta, Bruno, Varese (IT); Toci, Fernando, Varese (IT)
(74) Representative: Weinmiller, Jürgen

(57) **Abstract**

The invention relates to a method for purifying a stream of hydrogen isotopes from impurities by gas-solid exchange reactions, especially for treating the exhaust gases from a fusion reactor by means of adsorbent traps (3, 4) susceptible to adsorb said impurities at low temperature and to release these impurities at higher temperature. According to the invention, between the adsorption phase at low temperature and the release phase at higher temperature, an intermediate phase is installed, also at low temperature, during which an inert gas is fed to the trap for the complete recovery of the hydrogen isotopes adsorbed in the previous adsorption phase.

## Description

The invention relates to a method for purifying a stream of hydrogen isotopes from impurities by gas-solid exchange reactions, especially for treating the exhaust gases from a fusion reactor by means of zeolite traps susceptible to adsorb said impurities at low temperature and to release these impurities at higher temperature.

From document EP 0 293 730 A1, a method and a device of the type defined above are known, comprising three traps in series and intended to adsorb permanent gases and to be transparent to hydrogen and its isotopes. Some traps are constituted by modified zeolites operating at room temperature, while one is constituted by a mordenite-type zeolite and is operated at low temperature of about 77 K.

As far as this last-mentioned trap is concerned, the ratio between the adsorption capacity of the impurities and that of hydrogen isotopes is relatively low, which results in long processing times and in bulky installations. Moreover, a certain quantity of hydrogen isotopes is adsorbed besodes the permanent gases and requires special regeneration precautions.

It is further known from this document to provide two lines of traps in parallel and to operate these lines alternatively in the adsorption mode and in the release or regeneration mode, in which an inert gas such as helium is swept through the trap.

The main object of the present invention is to improve the efficiency of the method and thus to reduce the operation time and the bulk of the device.

According to the invention this object is achieved by the fact that between the adsorption phase at low temperature and the release or regeneration phase at higher temperature, an intermediate purge phase is installed, also at low temperature, during which an inert gas is fed to the trap.

As far as preferred details of this method are concerned, reference is made to the secondary claims.

The invention will now be described in more detail by means of a preferred embodiment and with reference to the enclosed drawings.

Figure 1 shows a diagram of a fusion reactor exhaust gas processing plant.

Figure 2 shows in detail the diagram of a particular stage of the plant of figure 1.

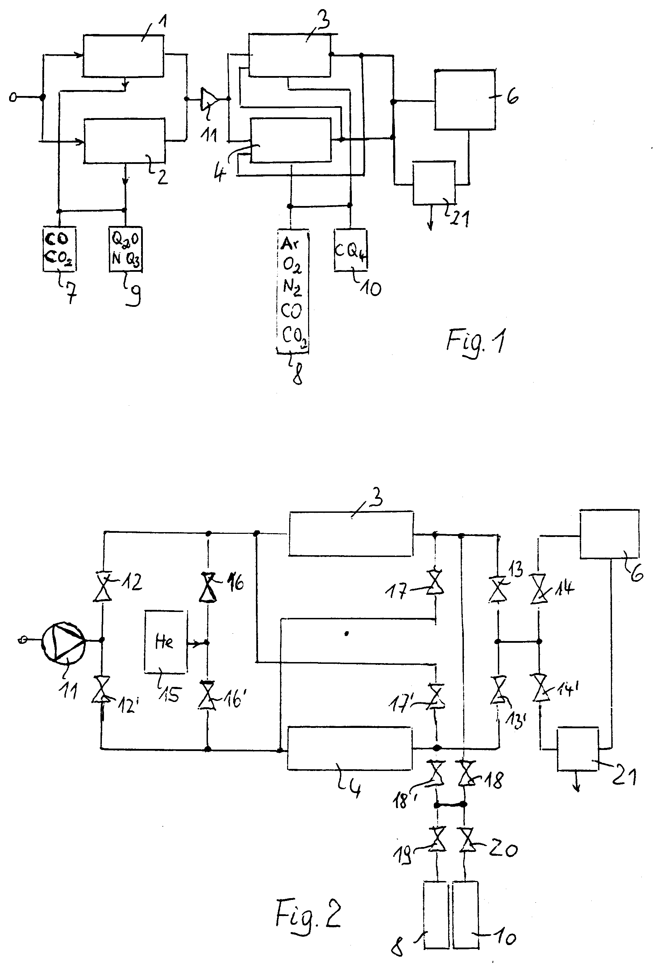

The engineering design of an exhaust gas processing plant for a fusion reactor shown in figure 1 is constituted by two lines in parallel, each one comprising two traps 1, 2 and 3, 4, respectively, which lines are fed alternatingly with the fusion reactor exhaust gases through input 5.

These gases may typically present the following composition, in which D means deuterium, T means tritium and Q means either hydrogen or deuterium or tritium. The numbers signify the flow rate as indicated in liters per hour.

**Table**

| (D,T)₂ | H₂ | C_{N}Q_{M}* | Q₂O | CO | CO₂ | N₂ | O₂ | NQ₃ | He |
|---|---|---|---|---|---|---|---|---|---|
| 1640 | 41 | 18,9 | 2,7 | 2,7 | 1,35 | 2,7 | 2,7 | 1,35 | 50,4 |

| | | | | | | | | | |
|---|---|---|---|---|---|---|---|---|---|
| * mainly CQ₄; however, other minor quantities of hydrocarbons containing deuterium and tritium can be present. | | | | | | | | | |

The inlets and outlets of the traps are associated with valves and temperature control means (not shown in figure 1) ensuring the proper operation of each trap in its adsorption or regeneration mode. During the adsorption mode, a trap receives the gas stream to be purified and adsorbs some of the impurities in this stream in accordance with the type of adsorbent installed in the trap. Thus, the traps 1 and 2 of the first stage operate at room temperature and adsorb primarily NQ₃ and H₂O as well as CO and CO₂. For other impurities, and in particular for hydrogen isotopes, this trap is transparent. The outlet gas stream from a trap 1 or 2 in the first stage is fed to a trap 3 or 4 in the second stage which operates in a range of temperature varying between 77 and 170 K according to the choice of the adsorbent. This adsorbent is preferably constituted by one member of the mordenite family. It has a very high adsorptive capacity for all the impurities not adsorbed in the trap 1 or 2 and a very low one for Q₂, so that a pure Q₂ stream is obtained at the outlet of trap 3 or 4 respectively. This outlet is connected to an isotope separation stage 6 constituted by a gas chromatographe delivering successively the different hydrogen isotopes to be recycled to the fusion ractor.

If, in the course of the adsorption, a trap approaches saturation, then impurities which should be adsorbed in the respective trap are detected at the outlet thereeof. For this reason, all the traps are associated with corresponding detectors (not shown in the drawing) and the entire plant is controlled by a microprocessor receiving the detector signals and switching the traps from the adsorption mode to the release or regeneration mode in which a wiping stream of inert gas such as helium passes through the respective trap and the temperature of the trap is raised to about 700 K, whereby the adsorbed impurities are released and conveyed to stacks 7 and 8 or conventional impurity processing sub-systems 9 and 10 in the case of gases containing radioactive isotopes.

It has been observed that in spite of the high ratio between the adsorption of impurities on the one hand and the adsorption of ydrogen isotopes on the other hand in the second stage trap 3 or 4, there was still a small, however non-neglectable amount of Q₂ of about 1 to 2% of the original Q₂ stream which was adsorbed in the trap 3 or 4. During the regeneration of this trap, the Q₂ content empoisened the released gases and it was desirable to isolate and to recover these hydrogen isotopes.

It will now be demonstrated in connection with figure 2 how this recovery of radioactive isotopes can be achieved in a simple way. In this drawing, several valves are shown which are controlled by the microprocessor of the plant in accordance with the method of the present invention. The gases to be purified are fed from the first stage containing the traps 1 and 2 via a pump 11 followed by a valve 12 to the inlet of trap 3. This valve is open as long as the trap 3 is in the adsorption mode and the gases then pass through the trap 3, an outlet valve 13 and an inlet valve 14 of the isotope separation stage 6. Preferably, the gas to be purified is mixed with an inert gas provided by a helium feeding system 15 and supplied through a helium feed valve 16 in order to ensure optimum adsorption conditions in the trap 3. Trap 4 is similarly supplied with valves 12', 13' and 16', but it is operated alternatingly with trap 3. This means that, while valve 12 is open, valve 12' is closed, and vice versa.

As long as one trap 3 or 4 is in the adsorption mode, the other trap may be in either of two operation conditions, one being called intermediate phase and the other impurities release phase. The intermediate phase is characterized by a low temperature identical to or only slightly higher than the adsorption temperature of 77 to 170 K. During this phase, helium is fed to the trap from the helium feeding system 15 through valve 16 or 16', thereby desorbing the hydrogen isotopes adsorbed in the trap during the proceeding adsorption phase, while the other impurities still remain fixed in the trap due to the low trap temperature. The desorbed hydrogen isotopes are conveyed to the isotope separation stage.

During this intermediate phase, the detectors at the outlet of trap 3 or 4 monitor the presence of impurities and terminate the intermediate phase as soon as other impurities than hydrogen are detected.

This phase is followed by the release phase which is characterized by a high temperature of about 700 K in the trap and by the release of the impurities adsorbed in the trap. These impurities are extracted via valves 18 and 18'. They might be argon, oxygen, nitrogen or carbon oxdes, which are conveyed to stacks via a valve 19, or hydrocarbons such as CQ₄, which are conveyed through valve 20 to an impurity processing sub-system in order to isolate the hydrogen isotopes.

According to a variant embodiment of the method according to the invention, it is possible to convey the outlet stream of a trap which is in the intermediate phase to the inlet of the other trap which, at that moment, is in the adsorption phase. To this end, valves 17 and 17' are provided for connecting the input of trap 3 with the outlet of trap 4 (valve 17) and vice versa (valve 17').

It is further possible to improve the purity of the hydrogen stream during the intermediate phase by treating the outlet stream of a trap in the intermediate phase in palladium-silver permeator units 21, in which permanent gases are separated from the hydrogen isotopes prior to conveying the latter to the isotope separation stage 6.

Due to the practically total recovery of tritium and tritiated components, the method according to the invention does not need any disposal technology for radioactive waste or special precautions concerning the desorbed impurities.

The invention is not restricted to the method as described by way of example in relation to the drawings. Thus, the temperature indications are subject to modification in accordance with adsorbents employed and the rate of impurities contained in the original gas stream. Other variants concern the adsorbent material in the trap 3 and 4. Although sorbents of the mordenite family are considered to be a preferred material, other adsorbents such as pillared clay material containing molecular sieve carbons, zirconium phosphates and their pillared forms with or without molecular sieve carbons and composite membranes based on inorganic porous materials may give comparable adsorbing results.

## Claims

1. A method for purifying a stream of hydrogen isotopes from impurities by gas-solid exchange reactions, especially for treating the exhaust gases from a fusion reactor, by means of adsorbent traps (3, 4) susceptible to adsorb said impurities at low temperature and to release these impurities at higher temperature, characterized in that between the adsorption phase at low temperature and the release or regeneration phase at higher temperature, an intermediate purge phase is installed, also at low temperature, during which an inert gas is fed to the trap.

2. A method according to claim 1, characterized in that the adsorbents of the traps (3, 4) are those of the mordenite family in which the sodium of the sodium type mordenite is exchanged to some extent by monovalent, bivalent or trivalent cations or pillared clays modified by monovalent cations such as Na or K, or bivalent cations such as Ca or Mg, or pillared clays containing molecular sieve carbons, or zirconium phosphates and their pillared forms with or without molecular sieve carbons, or composite membranes based on inorganic porous materials such as zeolites, pillared clays, zirconium phosphates.

3. A method according to claim 1 or 2, characterized in that during said intermediate phase, the gas leaving the respective trap is led to another trap of the same type which, at that time, operates in the adsorbing mode and is further receiving a stream of gas to be purified.

4. A method according to one of the preceding claims, characterized in that two identical traps (3, 4) being provided in parallel, one trap is operated in the adsorption mode while the other successively in the intermediate phase and in the release phase and vice versa.

5. A method according to any one of the preceding claims, characterized in that the gases leaving a trap (3, 4) which is in its intermediate phase are fed to Pd-Ag permeator units (21).
